# EUROPÄISCHE PATENTSCHRIFT

(11) **EP 0 761 701 B1**
(45) Veröffentlichungstag und Bekanntmachung des Hinweises auf die Patenterteilung: **03.11.1999**
(21) Anmeldenummer: 96113359.2
(22) Anmeldetag: 21.08.1996
(51) Int. Cl.: C08F 220/04, C08F 2/10, D21H 17/34, C02F 1/54, D21H 21/10

(54) **Vernetzte wasserlösliche Polymerdispersionen**
Cured aqueous soluble polymer dispersions
Dispersions de polymères réticulés solubles dans l'eau

(30) Priorität: 31.08.1995 DE 19532229
(43) Veröffentlichungstag der Anmeldung: 12.03.1997
(73) Patentinhaber: Stockhausen GmbH & Co. KG, 47805 Krefeld (DE)
(72) Erfinder: Braum, Manfred, 55122 Mainz (DE); Carl, Joachim, 64291 Darmstadt (DE); Desch, Wolfram, 64331 Weiterstadt (DE); Quis, Peter, Dr., 64289 Darmstadt (DE)

(56) Entgegenhaltungen:
- EP-A- 0 573 793
- DE-A- 2 924 663

## Beschreibung

Die Erfindung betrifft ein Verfahren zur Herstellung niedrigviskoser wasserlöslicher Polymerdispersionen enthaltend mindestens ein polymeres Dispergiermittel und ein Polymerisat, das durch den Einbau geeigneter Mengen eines N-Methylol-funktionellen Vernetzers vorwiegend erst in einem späteren Verarbeitungsschritt vernetzt. Die Polymerdispersionen gehen beim Verdünnen mit Wasser in Lösung und werden vor allem als Kleber, aber auch als Flockungsmittel verwendet.

### Stand der Technik

Wäßrige Dispersionen wasserlöslicher Polymerisate sind bekannt. Sie werden beispielsweise als Flockungsmittel bei der Abwasserbehandlung, als Entwässerungsmittel von Schlämmen, als Retentionsmittel bei der Papierherstellung, als Bodenverbesserungsmittel oder als Dispergiermittel eingesetzt.
EP 170 394 beschreibt eine mit Wasser mischbare Flüssigkeit bestehend aus Partikeln, aufgebaut aus einem hochmolekularen Polymergel, das Teilchengrößen von über 20 µm aufweist, in wäßriger Lösung. Die kontinuierliche Phase ist hierbei eine wäßrige Lösung, enthaltend ein "Äquilibrierungsmittel", das den Wassergehalt der Gelpartikel mit dem Wasseranteil in der kontinuierlichen Phase im Gleichgewicht hält und das somit eine Agglomeration der Gelpartikel verhindert. Als bevorzugte Äquilibrierungsmittel werden das Natriumsalz der Polyacrylsäure bzw. Polydiallyldimethylammoniumchlorid (Poly-DADMAC) verwendet.
In EP 183 466 wird ein Verfahren zur Herstellung einer wasserlöslichen Polymerdispersion beschrieben, gekennzeichnet durch Polymerisieren eines wasserlöslichen Monomeren unter Rühren in einer wäßrigen Lösung von wenigstens einem Salz in Gegenwart eines Dispergiermittels. Hierbei finden Polyole, Polyalkylenether, Alkalisalze der Polyacrylsäure und Alkalisalze der Poly-2-Acrylamido-2-methylpropansulfonsäure als Dispergiermittel Verwendung.
Die DE-PS 29 24 663 umfaßt ein Verfahren zur Herstellung einer wäßrigen Dispersion aus einer wasserlöslichen Polymermasse mit guter Stabilität und Fließfähigkeit, wobei das wasserlösliche Polymerisat wenigstens ein wasserlösliches, ethylenisch ungesättigtes Monomeres enthält und wobei als Dispergiermittel Polyalkylenether, Polyethylenimin oder andere Polymere anwesend sein können, gegebenenfalls in Gegenwart von anorganischen Salzen. Die solchermaßen hergestellte Dispersion kann, gegebenenfalls nach Verdünnen mit Wasser, als Flockunghilfsmittel, Verdickungsmittel, Bodenkonditionierungsmittel und für weitere Anwendungen eingesetzt werden.
In EP-A 262 945 wird eine homogene Mischung aus zwei wasserlöslichen Polymerisaten 1 und 2 beansprucht, wobei Polymerisat 1 durch Polymerisation entsprechender Monomerer in der wäßrigen Lösung von Polymerisat 2 hergestellt wird. Als Wirkstoffkonzentrationen, das heißt als Summe der Gehalte von Polymerisat 1 und 2, werden bezogen auf die wäßrige Lösung mindestens 10 Gew.-% genannt. Die Mengenverhältnisse von Polymerisat 1 zu Polymerisat 2 liegen zwischen 10 : 1 und 1 : 20. Anwendungsgebiet solcher Polymerlösungen sind die Stabilisierung von suspendierten Tonteilchen gegen Anquellen sowie der Einsatz als Flockungsmittel und Retentionsmittel bei der Papierherstellung.
EP-A 573 793 umfaßt wäßrige Dispersionen wasserlöslicher Polymerisate gebildet durch Polymerisation eines Gemischs bestehend aus wasserlöslichen, hydrophoben und gegebenenfalls amphiphilen Monomeren in Gegenwart eines polymeren Dispergiermittels. Die deutschen Patentanmeldungen P 43 16 200.2, P 43 35 567.6 sowie P 44 01 951.3 beschreiben Verfahren zur Herstellung solcher Dispersionen von wasserlöslichen Polymerisaten.

In der deutschen Patentanmeldung P 44 06 624.4 wird ein Verfahren zur Herstellung niedrigviskoser Polymerdispersionen enthaltend mindestens ein polymeres Dispergiermittel, sowie ein Copolymerisat bestehend aus mindestens einem wasserlöslichen Monomeren, mindestens einem vernetzenden Monomeren mit mindestens zwei radikalisch polymerisierbaren Gruppen, sowie gegebenenfalls mindestens einem hydrophoben Monomeren und gegebenenfalls mindestens einem amphiphilen Monomeren beschrieben. Die Vernetzung erfolgt hier ausschließlich über Monomere mit mindestens zwei radikalisch polymerisierbaren Gruppen bereits während der Polymerisation.

### Aufgabe und Lösung

Bei der Herstellung der im Stand der Technik beschriebenen wäßrigen Dispersionen wasserlöslicher Polymerisate durch Polymerisation von hydrophilen Monomeren in wäßriger Phase werden Anteile von vernetzungswirksamen Substanzen, z.B. vernetzenden Monomeren vermieden, da solche Anteile bei hohen Polymerisatgehalten zur Bildung makroskopischer Gele mit extrem hohen Viskositäten führen. Solche Vernetzungsmittel sind andererseits in relativ moderaten Anteilen interessant für die Erzeugung hoher Molekulargewichte bei den wasserlöslichen Polymerisaten, womit beispielsweise hohe Flockungseffizienz oder eine gute Verdickungswirkung erzielt werden kann.
Es ist eine Aufgabe der Erfindung, die Vernetzung zumindest zum Teil nicht während der Polymerisation, sondern gezielt erst in einem späteren Verarbeitungsschritt durchzuführen. Dadurch kann die Bildung makroskopischer Gele mit extrem hohen Viskositäten in der Dispersion vermieden werden.

Neben der Bereitstellung von wäßrigen Dispersionen wasserlöslicherPolymerisate, die einen bestimmten Anteil an vernetzenden Monomereinheiten enthalten, bestand weiterhin die Aufgabe, einen hohen Gehalt an Polymerisat-Wirkstoff in der wäßrigen Dispersion und gleichzeitig eine niedrige Viskosität der wäßrigen Dispersion zu erhalten. Darüber hinaus umfaßte die Aufgabe die Herstellung solcher wäßriger Dispersionen wasserlöslicher Polymerisate in Abwesenheit einer Ölphase und in Abwesenheit von Salzen, wie sie beispielsweise von EP-A 183 466 beschrieben werden, in der wäßrigen Phase, um den Anteil an ökologisch bedenklichen Substanzen in den Dispersionen möglichst niedrig zu halten.

Überraschenderweise wurde gefunden, daß die Aufgabenstellung hervorragend gelöst wird mit wäßrigen Dispersionen PD) wasserlöslicher Polymerisate A), gebildet durch die Polymerisation der Monomerbestandteile:
a1) 50 bis 99,99 Gew.-% mindestens eines wasserlöslichen Monomeren,
a2) 0,01 - 10 Gew.-%, vorzugsweise 0,01 - 3 Gew.-% eines N-Methylolgruppen-haltigen Vernetzers, insbesondere eines N-Methylolgruppen-haltigen Monomeren
a3) 0 bis 1 Gew.-% vorzugsweise 0 bis 0,5 Gew.-% eines vernetzenden Monomeren mit mindestens zwei ethylenisch ungesättigten, radikalisch polymerisierbaren Gruppen,
a4) 0 bis 30 Gew.-%, im besonderen Fall 1 bis 25 Gew.-%, mindestens eines hydrophoben Monomeren, sowie gegebenenfalls
a5) 0 bis 20 Gew-%, im besonderen Fall 0,1 bis 15 Gew-% mindestens eines amphiphilen Monomeren
in wäßriger Phase in Gegenwart eines polymeren Dispergiermittels D).

In bevorzugten Ausführungsformen der Erfindung weist mindestens eines der wasserlöslichen Monomeren a1) mindestens eine ionische Gruppe auf, ist das vernetzungsfähige Monomere a2) N-Methylol-acrylamid oder N-Methylol-methacrylamid, ist das vernetzende Monomere a3) ausgewählt aus der Gruppe der Di(meth)acrylverbindungen, Tri(meth)acrylverbindungen, Tetra(meth)acrylverbindungen, sowie (Meth)allyl(meth)acrylverbindungen, ist das hydrophobe Monomere a4) eine Verbindung der Formel I: 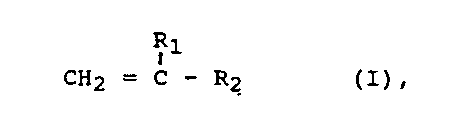 wobei
- R₁: für Wasserstoff oder Alkyl mit 1 bis 5 Kohlenstoffatomen, sowie
- R₂: für Alkyl, Cycloalkyl, Aryl oder Aralkyl mit 1 bis 20 Kohlenstoffatomen oder für 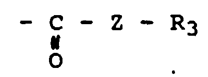 mit R₃ für Alkyl, Cycloalkyl, Aryl, oder Aralkyl mit 1 bis 20 Kohlenstoffatomen und Z für 0, NH oder NR₃
stehen können,
und ist das amphiphile Monomere a5) eine Verbindung der Formel II: 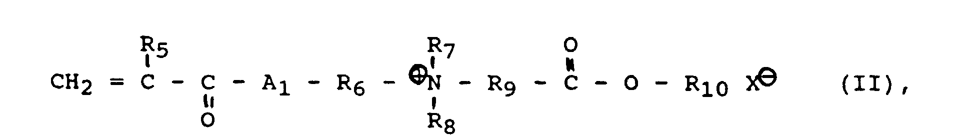 wobei
- A₁: für O, NH, NR₄ mit R₄· für Alkyl mit 1 bis 4 Kohlenstoffatomen,
- R₅: für Wasserstoff oder Methyl,
- R₆: für Alkylen mit 1 bis 18 Kohlenstoffatomen,
- R₇ und R₈: unabhängig voneinander für Alkyl mit 1 bis 6 Kohlenstoffatomen,
- R₉: für Alkylen mit 1 bis 6 Kohlenstoffatomen,
- R₁₀: für Alkyl, Aryl oder Aralkyl mit 8 bis 32 Kohlenstoffatomen, sowie
- X: für Halogen, OCN, SCN, SO₄CH₃, Acetat
stehen können,
oder eine Verbindung der Formel III: 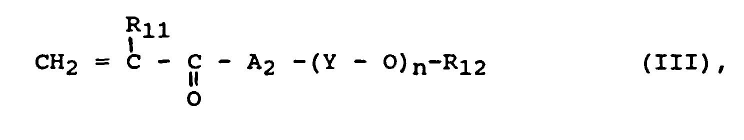 wobei
- A₂: für O, NH oder NR₁₃ mit R₁₃ für Alkyl mit 1 bis 4 Kohlenstoffatomen,
- R₁₁: für Wasserstoff oder Methyl,
- R₁₂: für Alkyl mit 8 bis 32 Kohlenstoffatomen,
- Y: für Alkylen mit 2 bis 6 Kohlenstoffatomen und
- n: für eine ganze Zahl zwischen 1 und 50
stehen können.

In einer weiteren bevorzugten Ausführungsform der Erfindung wird in einer ersten Stufe das Polymerisat A) in Gegenwart mindestens eines polymeren Dispergiermittels D), wie beschrieben, hergestellt und der resultierenden Polymerdispersion PD) danach in einer zweiten Stufe weiteres Dispergiermittel D) in wäßriger Lösung hinzugefügt (vgl. Auch DE-Patentanmeldung P 43 16 200.2). Es resultiert die Polymerdispersion PD'). Weiterhin können sich gemäß der deutschen Patentanmeldung P 43 35 567.6 der Herstellung der Polymerdispersion PD) oder der Polymerdispersion PD') in einer ersten Stufe die Reduktion des Wassergehalts zu einer aufkonzentrierten Polymerdispersion sowie in einer zweiten Stufe die Zugabe von weiterem Dispergiermittel D) in wäßriger Lösung anschließen. Es resultiert die Polymerdispersion PD").

### Durchführung der Erfindung

### Die Monomeren a1)

Als Monomere al) können beispielsweise Salze aus der Acryl- und/oder der Methacrylsäure der allgemeinen Formel IV eingesetzt werden: 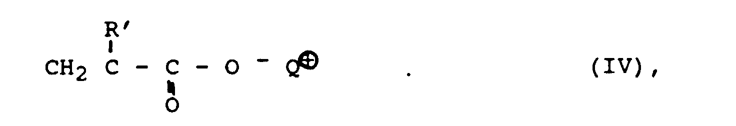 wobei
- R': für Wasserstoff oder Methyl und
- Q^{⊕}: für Alkalimetallionen, wie beispielsweise Na^{⊕} oder K^{⊕}, Ammoniumionen wie beispielsweise NH₄^{⊕}, ^{⊕}NR"H₃, ^{⊕}NR"₂H₂, ^{⊕}NR"₃H oder ^{⊕}NR"₄ mit R" = Alkyl mit 1 bis 6 Kohlenstoffatomen oder weitere einwertige, positiv geladene Ionen,
stehen können.

Zu Monomeren al) der Formel IV gehören beispielsweise Natrium(meth)acrylat, Natrium(meth)acrylat, oder Ammonium (meth) acrylat.
Desweiteren können als Monomerkomponente a1) beispielsweise die Acrylsäure und/oder die Methacrylsäure selbst sowie (Meth)acrylamide der Formel V verwendet werden: 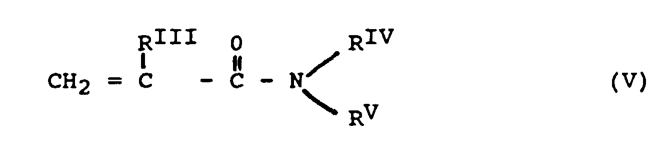 wobei
- R^{III}: für Wasserstoff oder Methyl, sowie
- R^{IV} und R^{V}: unabhängig voneinander für Wasserstoff und/oder für gegebenenfalls funktionalisierte Alkylreste mit 1 bis 5 Kohlenstoffatomen
stehen können.
Als Monomere a1) der Formel V seien beispielhaft genannt: (Meth)acrylamid, N-Methyl(meth)acrylamid, N,N-Dimethyl(meth)acrylamid, N-Methyl-N-Ethyl(meth)acrylamid sowie N-(2-Hydroxy)ethyl-(meth)acrylamid.

Zur Herstellung der (Meth)acrylamide vgl. beispielsweise Kirk-Othmer, Encyclopedia of Chemical Technology, 3rd. Ed., Vol. 15, Seiten 346 bis 376, Wiley Interscience, New York, 1981.

Weiterhin können als Monomerkomponente a1) Monomere der Formel VI eingesetzt werden: 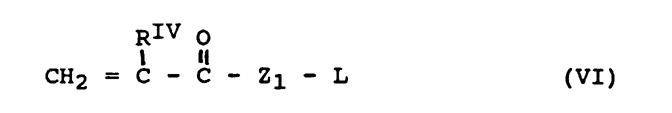 wobei
- R^{IV}: für Wasserstoff oder Methyl,
- Z₁: für 0, NH oder NR₄, sowie
- L: für die Gruppen: 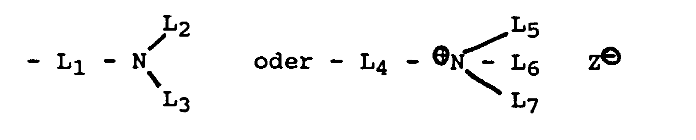 wobei L₁ und L₄ für einen Alkylenrest oder Hydroxyalkylenrest mit 2 bis 6 Kohlenstoffatomen, L₂, L₃, L₅, L₆ und L₇ unabhängig voneinander für Wasserstoff oder einen Alkylrest mit 1 bis 6 Kohlenstoffatomen, sowie Z für Halogen, Acetat oder SO₄CH₃
stehen können.

Beispielhaft für Monomere al) der Formel VI seien genannt: 2-(N,N-Dimethylamino)ethyl(meth)acrylat, 3-(N,N-Dimethylamino)propyl(meth)acrylat, 4-(N,N-Dimethylamino)butyl-(meth)acrylat, 2-(N,N-Diethylamino)ethyl(meth)acrylat, 2-Hydroxy-3-(N,N-dimethylamino)propyl(meth)acrylat, 2-(N,N,N-Trimethylammonium)ethyl(meth)acrylat-chlorid, (3-(N,N,N-Trimethylammonium)propyl(meth)acrylat-chlorid oder 2-Hydroxy-3-(N,N,N-trimethylammonium)propyl(meth)acrylat-chlorid bzw. die (Meth)acrylamide der o.g. Verbindungen, wie beispielsweise 2-Dimethylaminoethyl(meth)acrylamid, 3-Dimethylaminopropyl(meth)acrylamid oder 3-Trimethylammoniumpropyl(meth)acrylamid-chlorid. Zur Darstellung der (Meth)acrylammoniumsalze vgl. beispielsweise Kirk-Othmer, Encyclopedia of Chemical Technology, 3rd. Ed., Vol. 15, Seiten 346 bis 376, Wiley Interscience, New York, 1981. Als Monomerkomponente a1) können weiterhin ethylenisch ungesättigte Monomere, die zur Bildung von wasserlöslichen Polymeren befähigt sind, eingesetzt werden, wie beispielsweise Vinylpyridin, N-Vinylpyrrolidon, Styrolsulfonsäure oder N-Vinylimidazol.
Darüber hinaus sind auch Kombinationen verschiedener, unter a1) angeführter wasserlöslicher Monomeren möglich.

### Die N-Methylolgruppen-haltigen Vernetzungsmittel a2)

Der Einbau von N-Methylolgruppen-haltigen Vernetzungsmitteln in die erfindungsgemäßen Polymerdispersionen ist ein wesentliches Erfindungsmerkmal. Vernetzer auf N-Methylolbasis sind aus der Lackherstellung bekannt. Die hier stattfindende Vernetzung hat den Vorteil, daß sie gezielt durch äußere Einwirkung, z.B. durch Säurezusatz und/oder durch Temperatureinwirkung herbeigeführt werden kann. Meist erfolgt sie im Zuge der Filmbildung. In den erfindungsgemäßen Polymerdispersionen kann sie zum Teil durch eine "Nachpolymerisation" bei einer bis 40 Grad C höheren Temperatur über 0,1 - 10 Stunden erfolgen. Üblich sind 5 - 15 Grad C Temperaturerhöhung und 0,5 - 3 Stunden. die "Nachpolymerisation" dient aber in erster Linie der Reduzierung des Restmonomeren.

Ist mit der erfindungsgemäßen Polymerdispersion eine Anwendung vorgesehen, wo eine Filmbildung stattfindet, z.B. bei Einsatz als Tapetenbeschichtung, so erfolgt eine weitgehend vollständige Vernetzung beim Auftragen auf die Unterlage durch Trocknen unter gegebenenfalls kurzzeitigem Anlegen einer hohen Temperatur. Durch die niedrige Produktviskosität ist es möglich, die Polymerdispersion auch in dünner Schicht aufzutragen, z.B. < 10 g Trockengewicht des Films/m². Die durch die Vernetzung erzeugten hohen Molekulargewichte bedingen eine hohe Kohäsion des Klebefilms nach erfolgter Applikation.

N-Methylolgruppen vermöglich mit sich selber zu reagieren (Eigenvernetzung) oder auch mit anderen funktionellen Gruppen wie Amidgruppen oder Hydroxylgruppen (Fremdvernetzung). Beide Möglichkeiten sind in der vorliegenden Erfindung gegeben. Für die Fremdvernetzung finden sich geeignete funktionelle Gruppen unter den Monomeren a1, z.B. Acrylamid.
Die erfindungsgemäßen Vernetzungsmittel sind Kondensationsprodukte von Formaldehyd mit Amiden oder Aminen. Sie enthalten eine oder mehrere N-Methylolgruppen, auch als N-Hydroxymethylgruppen bezeichnet. Bevorzugt sind Monomere mit N-Methylolgruppen, wie N-Methylolmethacrylamid oder N-Methylolacrylamid. Bei deren Einbau entstehen Polymere, die vernetzungsfähige N-Methylolgruppen in der Polymerkette enthalten. Geeignet sind alle Monomere, die sowohl eine ethylenisch ungesättigte, radikalisch polymerisierbare Gruppe, als auch eine oder mehrere N-Methylol-funktionellen Gruppen enthalten.

Es können statt dessen aber auch nicht polymerisierbare Verbindungen, die 2 oder mehrere Methylol-Gruppen enthalten und dadurch als Vernetzer für die hydrophilen Polymerketten a1) wirken können, zugesetzt werden. Geeignet sind hier z.B. Dimethylolharnstoff, Trimethylolmelamin, Hexamethylolmelamin, oder niedermolekulare, wasserlösliche Melaminharze. Diese vernetzungsfähigen Verbindungen werden während der Polymerisation nicht oder nur in untergeordnetem Maße in die Polymerkette eingebaut. Sie werden zum Teil bei der Nachpolymerisation vernetzungswirksam, reagieren aber weitgehend vollständig als Vernetzer bei einem späteren Verarbeitungsschritt wie z.B. dem Trocknen des Films. Die N-Methylolgruppen-haltigen Vernetzungsmittel a2) werden vor oder während der Polymerisation in Mengen von 0,01 - 10 Gew.-%, bevorzugt 0,01 - 3 Gew.-%, besonders bevorzugt 0,02 - 2 Gew.-% zugesetzt.

### Die vernetzenden Monomeren a3)

Als weitere Vernetzungsmittel in Form von vernetzenden Monomeren finden Verbindungen mit mindestens zwei polymerisierbaren Gruppen Verwendung. Für Verbindungen mit zwei radikalisch polymerisierbaren, ethylenisch ungesättigten Gruppen können stehen:
1) Alkenyldi(meth)acrylate wie beispielsweise 1,6-Hexandioldi(meth)acrylat, 1,10-Decandioldi(meth)acrylat, 1,12-Dodecandioldi(meth)acrylat, 1,18-Octadecandioldi(meth)acrylat, Neopentylglycoldi(meth)acrylat, Methylendi(meth)acrylat, 2,2'-Bis(hydroxymethyl)-1,3-propandioldi(meth)acrylat, sowie vorzugsweise Glycoldi(meth)acrylat, 1,3-Propandioldi(meth)acrylat, 1,3-Butandioldi(meth)acrylat und 1,4-Butandioldi(meth)acrylat.
2) Alkenyldi(meth)acrylamide wie beispielsweise N-Methyldi(meth)acrylamid, N,N'-3-Methylbutylidenbis(meth)acrylamid, N,N'-(1,2-Dihydroxyethylen)bis(meth)acrylamid, sowie vorzugsweise N,N'-Hexamethylenbis (meth)acrylamid und besonders bevorzugt N,N'-Methylenbis(meth)acrylamid.
3) Polyalkoxydi(meth)acrylate der Formel VII: 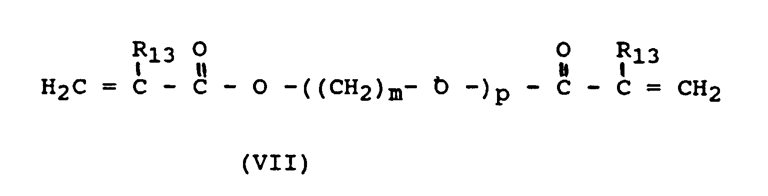 wobei
   - R₁₃: für Wasserstoff oder Methyl,
   - m: für eine ganze Zahl zwischen 2 und 6, sowie
   - p: für eine ganze Zahl zwischen 2 und 50
   stehen können.
Beispielhaft seien genannt:
   Polypropylenglycoldi(meth)acrylate (m = 3) mit p zwischen 4 und 25, Polybutylenglycoldi(meth)acrylat (m = 4) mit p zwischen 5 und 40, sowie die bevorzugt eingesetzten Polyethylenglycoldi(meth)acrylate (m = 2) mit p zwischen 2 und 45, wie beispielsweise Diethylenglycoldi(meth)acrylat, Triethylenglycoldi(meth)acrylat, Tetraethylenglycoldi(meth)acrylat oder vorzugsweise Polyethylenglycoldi(meth)acrylate mit p zwischen 5 und 20.
4. Als Di(meth)acrylate können beispielsweise weiterhin verwendet werden:
   Benzylidendi(meth)acrylat, Bisphenol-A-di(meth)-acrylat, 1,3-Di(meth)acryloyloxy-propanol-2, Hydrochinondi(meth)acrylat, acrylat, Thioethylenglycoldi(meth)acrylat, Thiopropylenglycoldi(meth)acrylat, Thiopolyethylenglycoldi(meth)acrylate sowie Thiopropylenglycoldi(meth)acrylate.
5. Divinylverbindungen wie beispielsweise 1,4-Butandioldivinylether oder Divinylbenzol, Butadien oder 1,6-Hexadien, Di(meth)allylverbindungen wie beispielsweise Di(meth)allylphthalat oder Di(meth)allylsuccinat, Vinyl(meth)acryl-Verbindungen wie beispielsweise Vinyl(meth)acrylat oder bevorzugt (Meth)allyl(meth)acryl-Verbindungen wie beispielsweise Allyl(meth)acrylat.

Für Verbindungen mit 3 oder mehr ethylenisch ungesättigten, radikalisch polymerisierbaren Gruppen seien beispielhaft genannt: Glycerintri(meth)acrylat, Trimethylolpropantri(meth)acrylat, Trimethylolpropantriethoxytri(meth)acrylat, Trimethacrylamid, (Meth)allylidendi(meth)acrylat, 3-Allyloxy-1,2-propandioldi(meth)acrylat, Triallylcyanurat oder Triallylisocyanurat, als Vertreter für Verbindungen mit mehr als 3 ethylenisch ungesättigten, radikalisch polymerisierbaren Gruppen: Pentaerythrittetra(meth)acrylat oder N,N,N',N'-Tetra(meth)acryloyl-1,5-pentandiamin.
Die vernetzenden Monomeren a3) werden in Kombination mit a2) in geringen Mengen von 0 - 1 Gew.-% bezogen auf die Gesamtkomonomeren eingesetzt.
Bevorzugt sind 0 - 0,5 Gew.-%. Ihr Zusatz ist nicht zwingend. Läßt man sie weg, übernimmt a2) ausschließlich die Vernetzungsfunktion.

### Die hydrophoben Monomeren a4)

Hydrophobe Monomere sind bevorzugt Monomere der Formel I: 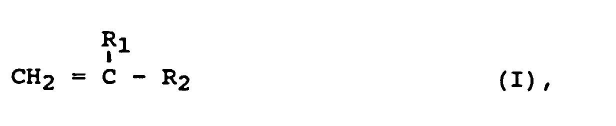 wobei
- R₁: für Wasserstoff oder Alkyl mit 1 bis 5 Kohlenstoffatomen und
- R₂: für Alkyl, Cycloalkyl, Aryl oder Aralkyl mit 1 bis 20 Kohlenstoffatomen oder für 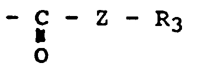 mit Z für O, NH oder NR₃ sowie R₃ für Alkyl, Cycloalkyl, Aryl oder Aralkyl mit 1 bis 20 Kohlenstoffatomen oder für Aryl mit 6 bis 12 Kohlenstoffatomen
stehen können.

Beispielhaft für Monomere der Formel I seien genannt: Styrol, -Methylstyrol, p-Methylstyrol, p-Vinyltoluol, Vinylcyclopentan, Vinylcyclohexan, Vinylcyclooctan, Propylen, Buten-1, Isobuten, 2-Methylbuten-1, 2-Methylhexen-1, 2-Propylhexen-1, Methyl(meth)acrylat, Ethyl(meth)acrylat, Propyl(meth)acrylat, Isopropyl(meth)acrylat, Butyl(meth)acrylat, Pentyl(meth)acrylat, Hexyl(meth)acrylat, Octyl(meth)acrylat, Decyl(meth)acrylat, Dodecyl(meth)acrylat, Tetradecyl(meth)acrylat, Hexadecyl(meth)acrylat, Octadecyl(meth)acrylat, Eicosyl(meth)acrylat, Cyclopentyl(meth)acrylat, Cyclohexyl(meth)acrylat, Cyclooctyl(meth)acrylat, Phenyl(meth)acrylat, 4-Methylphenyl(meth)acrylat oder 4-Methoxyphenyl(meth)acrylat.
Desweiteren können als hydrophobe Monomere a4) eingesetzt werden: Ethylen, Vinylidenchlorid, Vinylidenfluorid, Vinylchlorid oder weitere, überwiegend araliphatische Verbindungen mit polymerisierbaren Doppelbindungen. Dabei sind auch Kombinationen verschiedener hydrophober Monomerer a4) möglich.

### Die amphiphilen Monomeren a5)

Amphiphile Monomere a5) können beispielsweise monomere Verbindungen der Formel II sein: 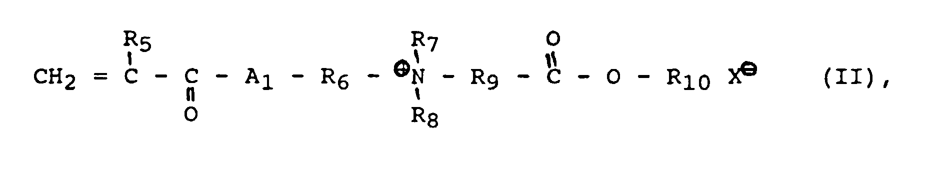 wobei
- A₁: für 0, NH, NR₄ mit R₄ für Alkyl mit 1 bis 4 Kohlenstoffatomen,
- R₅: für Wasserstoff oder Methyl,
- R₆: für Alkylen mit 1 bis 18 Kohlenstoffatomen,
- R₇ und R₈: unabhängig voneinander für Alkyl mit 1 bis 6 Kohlenstoffatomen,
- R₉: für Alkylen mit 1 bis 6 Kohlenstoffatomen,
- R₁₀: für Alkyl, Aryl oder Aralkyl mit 8 bis 32 Kohlenstoffatomen und
- X: für Halogen, OCN, SCN, SO₄CH₃ oder Acetat
stehen können.

Weiterhin umfassen die amphiphilen Monomeren a5) Verbindungen der Formel IIa. 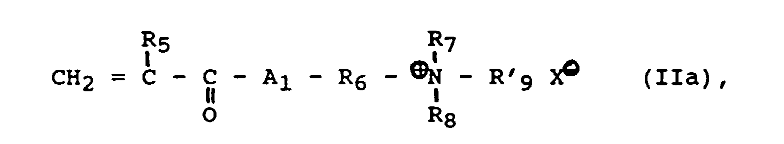 wobei A₁, R₅, R₆, R₇, R₈ und X dieselbe Bedeutung wie in Formel II besitzen, sowie R'₉ für Alkyl mit 1 bis 18 Kohlenstoffatomen stehen kann.

Beispielhaft für Monomere der Formel II und IIa seien genannt: 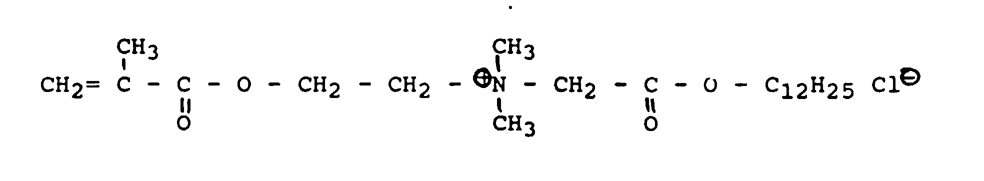 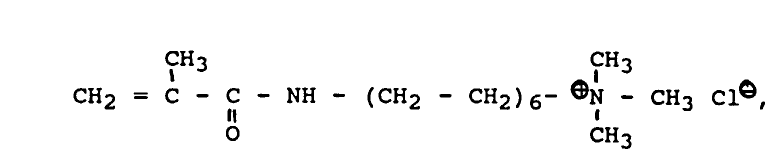 oder

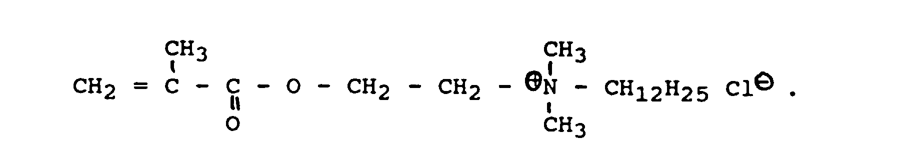

Zur Herstellung der amphiphilen Monomeren der Formeln II und IIa vgl. beispielsweise Kirk-Othmer, Encyclopedia of Chemical Technology, 3rd. Ed., Vol. 1, Seiten 330 bis 354, Vol. 15, Seiten 346 bis 376, 1978 und 1981, Wiley Interscience, New York.

Vorzugsweise werden amphiphile Monomere a5) der Formeln III und IIIa eingesetzt: 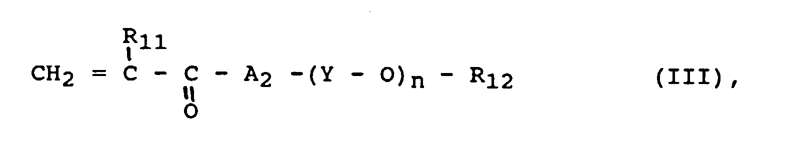 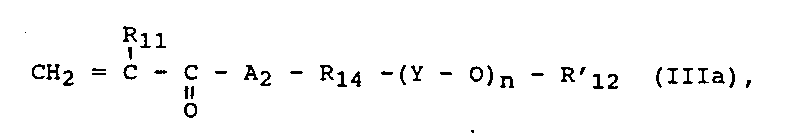 wobei
- A₂: für O, NH oder NR₁₃ mit R₁₃ für Alkyl mit 1 bis 4 Kohlenstoffatomen,
- R₁₁: für Wasserstoff oder Methyl,
- R₁₂: für Alkyl, Aryl oder Aralkyl mit 8 bis 32 Kohlenstoffatomen,
- R'₁₂: für Wasserstoff oder Alkyl mit 1 bis 4 Kohlenstoffatomen,
- R₁₄: für Alkylen mit 1 bis 18 Kohlenstoffatomen,
- Y: für Alkylen mit 2 bis 6 Kohlenstoffatomen, sowie
- n: für eine ganze Zahl zwischen 1 und 50
stehen können.

Beispielhaft für Monomere der Formeln III und IIIa seien genannt: 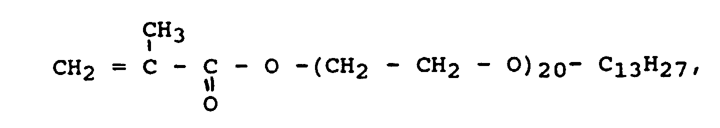 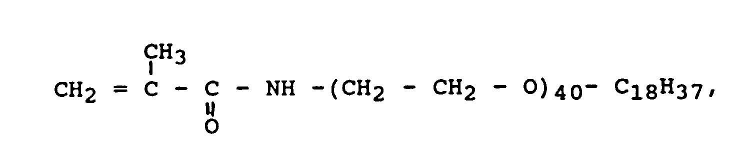 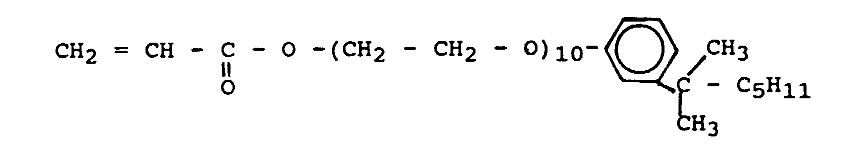 oder

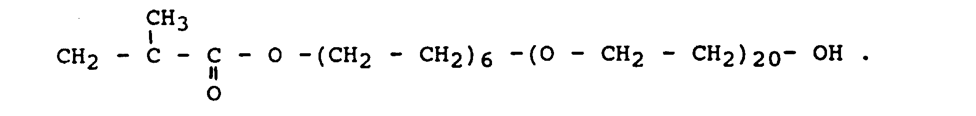

Dabei sind auch Kombinationen verschiedener amphiphiler Monomerer a5) möglich.

### Das polymere Dispergiermittel D)

Das polymere Dispergiermittel D) unterscheidet sich signifikant in der chemischen Zusammensetzung und im mittleren Molekulargewicht M_{w} (Gewichtsmittel) vom wasserlöslichen Polymerisat a) und ist mit diesem unverträglich. Die mittleren Molekulargewichte M_{w} der polymeren Dispergiermittel D) liegen im Bereich zwischen 10³ bis 5 x 10⁵ Dalton, vorzugsweise zwischen 10⁴ bis 4 x 10⁵ Dalton (zur Bestimmung von M_{w} vgl. H.F. Mark et al. Encyclopedia of Polymer Science and Technology, Vol. 10, Seiten 1 bis 19, J. Wiley, New York, 1987).
Die polymeren Dispergiermittel D) enthalten funktionelle Gruppen ausgewählt aus Ether-, Hydroxyl-, Carboxyl-, Sulfon-, Sulfatester-, Amino-, Amido-, Imino-, tert.-Amino- und/oder quaternäre Ammoniumgruppen. Beispielhaft für polymere Dispergiermittel D) seien genannt: Cellulosederivate, Polyethylenglycol, Polypropylenglycol, Copolymerisate aus Ethylenglycol und Propylenglycol, Polyvinylacetat, Polyvinylalkohol, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyvinyl-1,3-oxazolidon-2, Polyvinyl-2-methylimidazolin, sowie Copolymerisate, die neben Kombinationen aus monomeren Bausteinen obenangeführter Polymerisate beispielsweise folgende Monomereinheiten enthalten können: Maleinsäure, Maleinsäureanhydrid, Fumarsäure, Itakonsäure, Itakonsäureanhydrid, (Meth)acrylsäure, Salze der (Meth)acrylsäure oder (Meth)acrylamide.
Bevorzugt werden als polymere Dispergiermittel D) Polyalkylenether wie beispielsweise Polyethylenglycol, Polypropylenglycol oder Polybutylen-1,4-ether eingesetzt (zur Herstellung von Polyalkylenethern vergleiche beispielsweise Kirk-Othmer, Encyclopedia of Chemical Technology, 3rd. Ed. Vol. 18, Seiten 616 bis 670, Wiley Interscience, New York, 1982).

Besonders bevorzugt werden als polymere Dispergiermittel D) Polyelektrolyte verwendet, wie beispielsweise Polymerisate, enthaltend Salze der (Meth)acrylsäure als anionische Monomerbausteine oder als kationische Bausteine mit Methylchlorid quaternierte Derivate von N,N-Dimethylaminoethyl(meth)acrylat, N,N-Dimethylaminopropyl(meth)acrylat, N,N-Dimethylaminopropyl (meth) acrylamid oder N,N-Dimethylaminohydroxypropyl(meth)acrylat. Zur Herstellung von Polyelektrolyten vgl. beispielsweise Kirk-Othmer, Encyclopedia of Chemical Technology, 3rd. Ed., Vol. 18, Seiten 495 bis 530, Wiley Interscience, New York 1982.
Ganz besonders bevorzugt verwendet wird Polydiallyldimethylammonium-chlorid (Poly-DADMAC) mit einem mittleren Molekulargewicht M_{w} zwischen 5 x 10⁴ und 4 x 10⁵ Dalton als polymeres Dispergiermittel D) eingesetzt.

Desweiteren können niedermolekulare Emulgatoren mit einem Molekulargewicht M_{w} < 10³ Dalton in Mengen von 0 bis 5 Gew.-%, im besonderen Fall in Mengen von 0,1 bis 5 Gew.-% bezogen auf die gesamte Polymerdispersion eingesetzt werden.

Die Herstellung der wäßrigen Polymerdispersionen enthaltend Polymerisat A) und polymeres Dispergiermittel D)

### Das einstufige Herstellungsverfahren (Polymerdispersionen PD))

Die Menge des eingesetzten Monomerengemischs a1), a2) sowie gegebenenfalls a3), a4) und a5) bezogen auf 100 Gew-Teile Wasser als Reaktionsmedium liegt zwischen 5 und 80 Gew.-Teilen, vorzugsweise zwischen 10 und 50 Gew.-Teilen. Werden die Monomeren a1) und gegebenenfalls a5) als wäßrige Lösung eingesetzt, so wird der Wasseranteil dem Reaktionsmedium zugeschlagen. Die Menge des polymeren Dispergiermittels D) bezogen auf 100 Gew.-Teile Wasser als Reaktionsmedium liegt zwischen 1 und 50 Gew.-Teilen, bevorzugt zwischen 2 und 40 Gew.-Teilen, besonders bevorzugt zwischen 5 und 30 Gew.-Teilen.
Im allgemeinen wird das polymere Dispergiermittel im wäßrigen Reaktionsmedium vorgelegt bevor die Monomeren a1), a2) sowie ggfs a3), a4) und a5) hinzugefügt werden.

Zur gezielten Einstellung des Molekulargewichts kann der Monomermischung auch ein Regler zugesetzt werden. Dieser erniedrigt zwar das Molekulargewicht des Polymerisats A), ermöglicht aber die Bereitstellung von besonders niedrigviskosen Polymerdispersionen. Übliche wasserlösliche Polymerisationsregler sind Thioglykolsäure, 2-Mercaptoäthanol, Pentaerythrit-tetra-thioglycolat in Mengen von 0.01 - 2 %. Sie können zu Polymerisationsbeginn auf einmal oder sukzessive während der Polymerisation zudosiert werden.

Zum Starten der Polymerisation werden beispielsweise radikalische Initiatoren (= Polymerisationsstarter) oder hochenergetische Strahlung, wie beispielsweise UV-Licht, verwendet. Als radikalische Initiatoren bevorzugt werden beispielsweise 2,2'-Azobisisobutyronitril, 2,2'-Azobis(2-amidopropan)dihydrochlorid gelöst in Dimethylformamid, Kaliumpersulfat, Ammoniumpersulfat, Wasserstoffperoxid, gegebenenfalls in Kombination mit einem Reduktionsmittel, wie beispielsweise einem Amin oder Natriumsulfit, eingesetzt. Der Anteil an Initiator, bezogen auf das Monomerengemisch a1), a2) sowie gegebenenfalls a3), a4) und a5), liegt gewöhnlich zwischen 10⁻⁵ und 5 Gew.-%, vorzugsweise zwischen 10⁻⁴ und 1 Gew.-%, wobei der Initiator zu Beginn der Reaktion vollständig oder teilweise mit nachfolgender Dosierung über den gesamten Polymerisationsverlauf zugegeben werden kann. Ebenso kann das Monomerengemisch a1), a2) sowie gegebenenfalls a3), a4) und a5) vollständig am Anfang der Polymerisation oder teilweise als Zulauf über den gesamten Polymerisationsverlauf zugegeben werden. Es hat sich bewährt, bei adiabatischem Polymerisationsverlauf einen Teil des Monomeren a2) erst am Temperaturmaxiumum zuzusetzen. Hierdurch bleibt die Viskosität der Polymerdispersion besonders niedrig, die Vernetzungsmöglichkeit in einem der folgenden Verfahrensschritte ist aber voll gegeben. Die Polymerisationstemperatur beträgt zwischen 0 und 100 Grad C, bevorzugt zwischen 30 und 70 Grad C. Vorzugsweise wird unter Inertgas-Atmosphäre, beispielsweise unter Stickstoff-Atmosphäre polymerisiert. Der Endumsatz der Polymerisation liegt über 97 Gew.-% des Monomerengemischs a1), a2) sowie gegebenenfalls a3), a4) und a5), wofür im allgemeinen 1 bis 10 Stunden Polymerisationsdauer erforderlich sind. Bevorzugt erhöht man gegen Ende der Polymerisation noch einmal die Temperatur um 5 - 15 Grad C und fügt weiteren Initiator hinzu. Hierdurch sinkt der Restmonomerengehalt unter 0,1 %. Diese weitere Initiatorzugabe kann mengenmäßig das 2 - 20-fache gegenüber dem Polymerisationsstart betragen. Es resultieren Polymerdispersionen PD).

### Das zweistufige Herstellungsverfahren (Polymerdispersionen PD'))

Das zweistufige Herstellungsverfahren umfaßt die Zugabe von weiteren polymeren Dispergiermitteln D) in wäßriger Lösung zu der nach dem einstufigen Verfahren hergestellten Dispersion PD) des Polymerisats A). Es resultieren Polymerdispersionen PD').
Für den Mischvorgang können sowohl statische als auch dynamische Mischer verwendet werden. Während erstere durch Erzeugung von Turbulenz wirken, die in den Flüssigkeitsgemischen beim Durchströmen der Mischer entsteht, wird die Turbulenz bei dynamischen Mischern aktiv erzeugt (vgl. hierzu beispielsweise Römpps Chemielexikon, 9. Aufl., Seite 2805, Georg Thieme, Stuttgart, New York, 1992).
Bevorzugt werden als Mischer Rührer eingesetzt, die beim Rührvorgang ein geringes Schergefälle erzeugen, wie beispielsweise Propeller-, Schrägblatt-, Scheiben-, Impeller-, Kreuzbalken-, Gitter-, Anker-, Schraubenspindel- oder Wendelrührer (vgl. hierzu beispielsweise Römpps Chemielexikon, 9. Aufl., Seiten 3939 bis 3940, Georg Thieme, Stuttgart, New York, 1993).
Beim Mischvorgang wird vorzugsweise die nach dem einstufigen Verfahren hergestellte Polymerdispersion PD) vorgelegt und danach die wäßrige Lösung des polymeren Dispergiermittels D) unter Rühren schrittweise hinzugefügt. Dabei wird die Viskosität des Gemisches ständig kontrolliert.
In einer besonders bevorzugten Ausführungsform der Erfindung wird die Polymerdispersion PD) auf 30 bis 90 Grad C, vorzugsweise auf 40 bis 70 Grad C erwärmt, um die Viskosität während des Mischvorgangs möglichst niedrig zu halten. Auch hier wird bevorzugt eine Nachpolymerisationsphase bei erhöhter Temperatur unter Zugabe von weiterem Initiator angeschlossen.

### Das modifizierte zweistufige Herstellungsverfahren (Polymerdispersionen PD''))

Das modifizierte zweistufige Herstellungsverfahren umfaßt in der ersten Stufe die Reduktion des Wassergehalts der nach dem einstufigen Verfahren hergestellten Polymerdispersionen PD) bzw. des Wassergehalts der nach dem zuvor beschriebenen zweistufigen Verfahren hergestellten Polymerdispersionen PD') und danach in der zweiten Stufe die Zugabe von polymerem Dispergiermittel D) in wäßriger Lösung, wie beim zweistufigen Verfahren beschrieben. Es resultieren Polymerdispersionen PD").

Der Wassergehalt der Polymerdispersionen PD) bzw. PD') wird vorzugsweise durch Verdampfen des Wassers reduziert. Dies kann beispielsweise durch Abdestillieren des Wassers erfolgen, vorzugsweise bei Unterdruck oder im Vakuum. Die hierbei verwendeten Destillationsapparate sind bekannt, wie beispielsweise Destillationskolonnen (vgl. beispielsweise Kirk-Othmer, Encyclopedia of Chemical Technology, 3rd. Ed., Vol. 7, Seiten 849 bis 891, Wiley Interscience, New York, 1979). Weitere Verdampfungsaggregate sind beispielsweise Konvektionsverdampfer oder Dünnschichtverdampfer (vgl. hierzu beispielsweise Kirk-Othmer, loc.cit., Vol. 9, Seiten 472 bis 493, Wiley Interscience, New York, 1980).

Auch Methoden wie Membrandiffusion oder das Binden von Wasser mit anorganischen oder organischen Reagenzien sind möglich.
Der Wassergehalt der Polymerdispersionen PD) bzw. PD') kann in dem Maße reduziert werden, wie die Viskosität der resultierenden Polymerdispersionen eine technologisch vernünftige Handhabung zuläßt und solange es die Dispersionsstabilität zuläßt. Im allgemeinen sind in der ersten Stufe Polymerdispersionen mit einem Wirkstoffgehalt von bis zu 50 Gew.-% bezogen auf die Dispersion oder leicht darüber möglich.
Die Zugabe des polymeren Dispergiermittels D) in der zweiten Stufe des modifizierten zweistufigen Herstellungsverfahrens erfolgt wie beim zweistufigen Herstellungsverfahren beschrieben. Wiederum wird die in Stufe 1 hergestellte Polymerdispersion mit reduziertem Wassergehalt vorzugsweise auf 30 bis 90 Grad C, besonders bevorzugt auf 40 bis 70 Grad C erwärmt, um die Viskosität beim Zumischen des polymeren Dispergiermittels möglichst niedrig zu halten. Es resultieren die Polymerdispersionen PD") mit sehr hohen Wirkstoffgehalten bei vergleichsweise sehr niedrigen Viskositäten.

### Vorteilhafte Wirkungen der Erfindung

Die die vernetzenden Monomereinheiten a2) und gegebenenfalls a3) enthaltenden Polymerdispersionen PD), PD') sowie PD") zeichnen sich, gemessen an der Wirkstoffkonzentration, durch eine überraschend niedrige Viskosität aus, wobei der Wirkstoff aus der Kombination von Polymerisat A) und polymeren Dispergiermittel D) besteht. Dies ist umso überraschender, da die Molekulargewichte des wasserlöslichen Polymerisats A) durch die vernetzenden Monomerkomponenten a2) und gegebenenfalls a3) bedingt deutlich höher als bei den Polymerisaten sind, die in den Polymerdispersionen des Standes der Technik anwesend sind.

Ein weiterer Vorteil speziell der vernetzungsfähigen N-Methylol-haltigen Verbindungen a2) ist der, daß die Vernetzung gezielt durch einen thermischen Verfahrensschritt bei der Verarbeitung herbeigeführt werden kann. So läßt sich die Polymerdispersion aufgrund ihrer geringen Viskosität trotz ihres hohen Wirkstoffgehalts hervorragend verarbeiten, z.B. in dünner Schicht auf eine Oberfläche auftragen. Erst dann erfolgt der thermische Verfahrensschritt, z.B. Trocknen, gegebenenfalls unter erhöhter Temperatur. Die dabei erfolgende Molekulargewichtserhöhung durch Vernetzung des Polymerisationsfilms bedingt eine besonders gute Kohäsion der Schicht. Daher ist ein Hauptanwendungsgebiet der erfindungsgemäßen Polymerdispersionen der Einsatz als Kleber, z.B. als Beschichtungsmittel für Tapeten.

Beim Verdünnen der wäßrigen Polymerdispersion PD), PD') sowie PD") steigt die aktuelle Viskosität auf ein sehr hohes Maximum, wobei das System klar wird. Hierbei wird die verdickende Wirkung des dispergierten Polymerisats A) deutlich.
Ein weiteres vorteilhaftes Merkmal der erfindungsgemäßen wäßrigen Polymerdispersionen ist die hohe Scher- und Standstabilität. So bleibt die hohe Viskosität einer wäßrigen Lösung mit 1 % Gehalt an Polymerisat A) auch nach längerem Rühren konstant. Diese Eigenschaft ist ebenfalls für die Verwendung als Bestandteil einer Tapetenbeschichtung vorteilhaft.
Die Abwesenheit von organischen Lösungsmitteln gewährleistet eine sichere Handhabung (beispielsweise keine Entflammbarkeit) und eine ökologisch unbedenkliche Verwendung der erfindungsgemäßen Polymerdispersionen PD), PD') bzw. PD") als Verdickungsmittel, als Flockungshilfsmittel für Klärschlämme, als Retentionsmittel für die Papierherstellung und/oder als Bodenverbesserungsmittel. In isolierter oder wasserarmer Form kann das erfindungsgemäße Polymerisatgemisch als Entwässerungsmittel, beispielsweise im Hygienebereich, verwendet werden.

Die folgenden Beispiele sollen die Erfindung erläutern. Die physikalischen Daten wurden anhand der folgenden Normen bestimmt:
- Dynamische Viskosität η (mPa·s) nach DIN 53018/53019
- Molekulargewicht M_{w} per Gelpermeationschromatographie (vgl. z.B. H.F. Mark et al., loc.cit., Vol. 10, Seiten 1 bis 19) mit Standard Poly-2-Trimethylammoniumethylacrylatchlorid.
- Stammbergewert STB II (s):
   Bestimmung des zeitlichen Verlaufs der Kaolinsedimentation bei Flockungsmittel-haltigen Lösungen nach dem Flockungsvorgang.
   Pro Liter Leitungswasser (20° DH) werden 20 g Kaolin suspendiert und unter Rühren homogen gehalten.
   Danach werden 250 ml Kaolinsuspension in einem 250 ml-Meßzylinder gefüllt und unter Rühren homogen gehalten. Zur Dosierung von 1 ml 0,1 %iger wäßriger Lösung der Polymerdispersion PD), PD') bzw. PD'') wird das Rühren unterbrochen.
   Anschließend wird noch 15 s gerührt und hiernach das Rühren abgestellt. Danach wird die Zeit für das Absinken des Sedimentationsspiegels um 4 cm im Meßzylinder genommen, welche dem Stammbergewert STB II entspricht.

### BEISPIELE

### Beispiel 1

### Polymerdispersion mit N-Methylol-funktioneller Methacrylatverbindung

350,0 g einer 40 %igen Poly-DADMAC-Lösung, 242,5 g einer 40 %igen Acrylamid-Lösung, 125,0 g einer 80 %igen wäßrigen 2-Trimethylammoniummethylacrylatchlorid-Lösung, 3 g Butylacrylat, 0,48 g N-Methylolmethacrylamid und 279,5 g Wasser werden in einem Reaktionsgefäß mit N₂ entgast und unter Rühren auf 55 Grad C erwärmt. Anschließend werden 0,04 g 2,2'-Azobis[2-(2-imidazolin-2-yl)-propan]-dihydrochlorid (AIP) gelöst in 0,36 g Wasser hinzugefügt. Nach 1,5 Stunden unter Rühren wird die Temperatur auf 65 Grad C erhöht und weitere 0,2 g AIP gelöst in 1,8 g Wasser zugegeben. die Nachreaktion dauert 1 Stunde bei konstanter Temperatur von 65 Grad C. Anschließend wird die resultierende Polymerdispersion PD) mit 200,0 g Poly-DADMAC-Lösung (40 %ig) verdünnt.
Die resultierende Polymerdisperion PD1) ist durch folgende Größen gekannzeichnet. Die dynamische Viskosität der wäßrigen Polymerdispersion beträgt η₁ = 70300 mPa·s. Die dynamische Viskosität einer 1 %igen wäßrigen Lösung des hochmolekularen Polymerisats beträgt η₂ = 1560 mPa·s. Der Flockungswert beträgt: STB II = 17,0 s.
Trockengehalt: 35 %
Die Polymerdispersion eignet sich gut als Flockungsmittel, aber auch als Kleber mit hoher Klebekraft.

### Beispiel 2

### Polymerdispersion mit N-Methylol-funktioneller Methacrylverbindung, Monomerzugabe zweistufig

350,0 g einer 40 %igen Poly-DADMAC-Lösung, 242,5 g einer 40 %igen Acrylamid-Lösung, 125,0 g einer 80 %igen wäßrigen 2-Trimethylammoniummethylacrylatchlorid-Lösung, 3 g Butylacrylat, 0,48 g N-Methylolmethacrylamid und 279,5 g Wasser werden in einem Reaktionsgefäß mit N₂ entgast und unter Rühren auf 55 Grad C erwärmt. Anschließend werden 0,04 g 2,2'-Azobis[2-(2-imidazoling-2-yl)-propan]-dihydrochlorid (AIP) gelöst in 0,36 g Wasser hinzugefügt. Bei dem Temperaturmaximum der exothermen Reaktion (Tₘₐₓ) werden weitere 0,48 g N-Methylolmethacrylamid zugegeben. Nach 1,5 Stunden unter Rühren wird die Temperatur auf 65 Grad C erhöht und weitere 0,2 g AIP gelöst in 1,8 g Wasser zugegeben. Die Nachreaktion dauert 1 Stunde bei konstanter Temperatur von 65 Grad C. Anschließend wird die resultierende Polymerdispersion PD) mit 200,0 g Poly-DADMAC-Lösung (40 %ig) verdünnt.
Die resultierende Polymerdispersion PD1) ist durch folgende Größen gekennzeichnet: Die dynamische Viskosität der wäßrigen Polymerdispersion beträgt η₁ = 44900 mPa·s. Die dynamische Viskosität einer 1 %igen wäßrigen Lösung des hochmolekularen Polymerisats beträgt η₂ = 1750 mPa·s. Der Flockungswert beträgt: STB II = 14,4 s.
Trockengehalt: 35 %.
Die Polymerdispersion eignet sich gut als Flockungsmittel, aber auch als Kleber mit hoher Klebekraft.

### Beispiel 3

### Polymerdispersion mit N-Methylol-funktioneller Methacrylverbindung, Zugabe zweistufig

350,0 g einer 40 %igen Poly-DADMAC-Lösung, 242,5 g einer 40 %igen Acrylamidlösung, 125,0 g einer 80 %igen wäßrigen 2-Trimethylamoniumethylacrylatchlorid-Lösung, 3 g Butylacrylat, 0,48 g N-Methylolmethacrylamid und 279,5 g Wasser werden in einem Reaktionsgefäß mit N₂ entgast und unter Rühren auf 55 Grad C erwärmt. Anschließend werden 0,04 g 2,2'-Azobis[2-(2-imidazolin-2-yl)-propan]-dihydrochlorid (AIP) gelöst in 0,36 g Wasser hinzugefügt. Bei dem Temperaturmaximum der exothermen Reaktion (Tₘₐₓ) werden weitere 1,92 g N-Methylolmethacrylamid zugegeben. Nach 1,5 Stunden Rühren wird die Temperatur auf 65 Grad C erhöht und weitere 0,2 g AIP gelöst in 1,8 g Wasser Zugegeben. Die Nachreaktion dauert 1 Stunde bei konstanter Temperatur von 65 Grad C. Anschließend wird die resultierende Polymerdispersion PD) mit 200,0 g Poly-DADMAC-Lösung (40 %ig) verdünnt.
Die resultierende Polymerdispersion PD1) ist durch folgende Größen gekennzeichnet: Die dynamische Viskosität der wäßrigen Polymerdispersion beträgt η₁= 77800 mPa·s. Die dynamische Viskosität einer 1 %igen wäßrigen Lösung des hochmolekularen Polymerisats beträgt η₂ = 2340 mPa·s. Der Flockungswert beträgt: STBII = 12,6 s.
Trockengehalt: 35 %.
Die Polymerdispersion eignet sich gut als Flockungsmittel, aber auch als Kleber mit hoher Klebehaft.

### Beispiel 4

### Polymerdispersion enthaltend sowohl eine N-Methylolfunktionelle Methacrylsäureverbindung als auch ein Monomeres mit zwei radikalisch polymerisierbaren, ethylenisch ungesättigten Gruppen

350,0 g einer 40 %igen Poly-DADMAC-Lösung, 242,5 g einer 40 %igen Acrylamid-Lösung, 125,0 g einer 80 %igen wäßrigen 2-Trimethylammoniumethylacrylatchlorid-Lösung, 3 g Butylacrylat, 0,48 g N-Methylolmethacrylamid, 20 ppm N,N'-Methylenbis(methacrylamid) und 279,5 g Wasser werden in einem Reaktionsgefäß mit N₂ entgast und unter Rühren auf 55 Grad C erwärmt. Anschließend werden 0,04 g 2,2'-Azobis[2-(2-imidazolin-2-yl)-propan]-dihydrochlorid (AIP) gelöst in 0,36 g Wasser hinzugefügt. Nach 1,5 Stunden unter Rühren wird die Temperatur auf 65 Grad C erhöht und weitere 0,2 g AIP gelöst in 1,8 g Wasser zugegeben. Die Nachreaktion dauert 1 Stunde bei konstanter Temperatur von 65 Grad C. Anschließend wird die resultierende Polymerdispersion PD) mit 200,0 g Poly-DADMAC-Lösung (40 %ig) verdünnt.
Die resultierende Polymerdispersion PD1) ist durch folgende Größen gekennzeichnet: Die dynamische Viskosität der wäßrigen Polymerdispersion beträgt η₁ = 554000 mPa·s. Die dynamische Viskosität einer 1 %igen wäßrigen Lösung des hochmolekularen Polymerisats beträgt η₂ = 1670 mPa·s. Der Flockungswert beträgt: STBII = 18,5 s.
Trockengehalt: 35 %
Die Polymerdispersion eignet sich gut als Flockungsmittel.

### Beispiel 5

### Polymerdispersion mit N-Methylol-funktioneller Methacrylverbindung, schwach geregelt

350,0 g einer 40 %igen Poly-DADMAC-Lösung, 194,0 g einer 50 %igen Acrylamid-Lösung, 125,0 g einer 80 %igen wäßrigen 2-Trimethylammoniummethylacrylatchlorid-Lösung, 3 g Butylacrylat, 4,32 g N-Methylolmethacrylamid, 0,1 g 2-Mercaptoethanol und 320,3 g Wasser werden in einem Rekationsgefäß mit N₂ entgast und unter Rühren auf 55 Grad C erwärmt. Anschließend werden 0,04 g 2,2'-Azobis-[2-(2-imidazolin-2-yl)-propan]-dihydrochlorid (AIP) gelöst in 0,36 g Wasser hinzugefügt. Nach 1,5 Stunden unter Rühren wird die Temperatur auf 65 Grad C erhöht und weitere 0,2 g AIP gelöst in 1,8 g Wasser zugegeben. Die Nachreaktion dauert 1 Stunde bei konstanter Temperatur von 65 Grad C. Anschließend wird die resultierende Polymerdispersion PD) mit 200,0 g Poly-DADMAC-Lösung (40 %ig) verdünnt.
Die resultierende Polymerdispersion PD1) ist durch folgende Größen gekennzeichnet: Die dynamische Viskosität der wäßrigen Polymerdispersion beträgt η₁ = 11200 mPa·s. Die dynamische Viskosität einer 1 %igen wäßrigen Lösung des hochmolekularen Polymerisats beträgt η₂ = 126 mPa·s. Der Flockungswert beträgt: STB II = 33,0 s.
Trockengehalt: 35 %.
Die Polymerisation eignet sich besonders gut als Kleber mit hoher Klebekraft.

### Beispiel 6

### Polymerdispersion mit N-Methylol-funktioneller Methacrylverbindung, stärker geregelt

350,0 g einer 40 %igen Poly-DADMAC-Lösung, 242,5 g einer 40 %igen Acrylamid-Lösung, 125,0 g einer 80 %igen wäßrigen 2-Trimethylammoniumethylacrylatchlorid-Lösung, 3 g Butylacrylat, 5,76 g N-Methylolmethacrylamid, 0,2 g 2-Mercaptoethanol und 269,3 g Wasser werden in einem Reaktionsgefäß mit N₂ entgast und unter Rühren auf 55 Grad C erwärmt. Anschließend werden 0,04 g 2,2'-Azobis-[2-(2-imidazolin-2-yl)-propan]-dihydrochlorid (AIP) gelöst in 0,36 g Wasser hinzugefügt. Nach 1,5 h unter Rühren wird die Temperatur auf 65 Grad C erhöht und weitere 0,2 g AIP gelöst in 1,8 g Wasser zugegeben. Die Nachreaktion dauert 1 Stunde bei konstanter Temperatur von 65 Grad C. Anschließend wird die resultierende Polymerdispersion PD) mit 200,0 g Poly-DADMAC-Lösung (40 %ig) verdünnt.
Die resultierende Polymerdispersion PD1) ist durch folgende Größen gekennzeichnet: Die dynamische Viskosität der wäßrigen Polymerdispersion beträgt η₁ = 36000 mPa·s. Die dynamische Viskosität einer 1 %igen wäßrigen Lösung des hochmolekularen Polymerisats beträgt η₂ = 11,2 mPa·s. Der Flockungswert beträgt: STB II = 43,2 s.
Trockengehalt: 35 %.
Die Polymerdispersion eignet sich besonders gut als Kleber mit hoher Klebekraft.

### Beispiel 7

### Polymerdispersion mit N-Methylol-funktioneller Acrylverbindung

350 g einer 40 5igen Poly-DADMAC-Lösung, 242,5 g einer 40 %igen Acrylamid-Lösung, 125,0 g einer 80 %igen wäßrigen 2-Trimethylammoniumethylacrylatchlorid-Lösung, 3 g Butylacrylat, 0,1 g N-Methylolacrylamid und 278,1 g Wasser werden in einem Reaktionsgefäß mit N₂ entgast und unter Rühren auf 55 Grad C erwärmt. Anschließend werden 0,04 g 2,2'-Azobis[2-(2-imidazolin-2-yl)propan]dihydrochlorid (AIP) gelöst in 0,36 g Wasser hinzugefügt. Nach 1,5 Stunden unter Rühren wird die Temperatur auf 65 Grad C erhöht und weitere 0,2 g AIP gelöst in 1,8 g Wasser zugegeben. Die Nachreaktion dauert 1 Stunde bei konstanter Temperatur von 65 Grad C. Anschließend wird die resultierende Polymerdispersion PD) mit 200,0 g Poly-DADMAC-Lösung (40 %ig) verdünnt.
Die resultierende Polymerdispersion PD1) ist durch folgende Größen gekennzeichnet: Die dynamische Viskosität der wäßrigen Polymerdispersion beträgt η₁ = 53100 mPa·s. Die dynamische Viskosität einer 1 %igen wäßrigen Lösung des hochmolekularen Polymerisats beträgt η₂ = 1160 mPa·s. Der Flockungswert beträgt STB II = 13,5 s.
Trockengehalt: 35 %.
Die Polymerdispersion eignet sich besonders gut als Kleber mit hoher Klebekraft.

## Patentansprüche

1. Verfahren zur Herstellung niedrigviskoser, wasserlöslicher Polymerdispersionen PD) auf wäßriger Basis mit hohen konzentrationen,
dadurch gekennzeichnet,
daß die Monomerkomponenten
a1) 50 bis 99,99 Gew.-% mindestens eines wasserlöslichen Monomeren,
a2) 0,01 - 5 Gew.-% einer vernetzungsfähigen N-Methylol-Verbindung
a3) 0 bis 1 Gew.-% mindestens eines vernetzenden Monomeren mit mindestens zwei ethylenisch ungesättigten, radikalisch polymerisierbaren Gruppen, sowie gegebenenfalls
a4) 0 bis 30 Gew.-% mindestens eines hydrophoben Monomeren und
a5) 0 bis 20 Gew.-% mindestens eines amphiphilen Monomeren
in wäßriger Lösung in Gegenwart mindestens eines polymeren Dispergiermittels D) zu einem Polymerisat A) polymerisiert werden, daß sich die Monomerkomponenten a1), a2), a3), a4) und a5) zu 100 Gew.-% ergänzen, daß das resultierende Polymerisat A) ein mittleres Molekulargewicht M_{w} von mindestens 5 x 10⁵ Dalton aufweist, sowie daß das Polymerisat A) mit dem Dispergiermittel D) unverträglich ist.

2. Verfahren gemäß Anspruch 1, dadurch gekennzeichnet, daß mindestens eines der wasserlöslichen Monomeren a1) eine ionische Gruppe aufweist.

3. Verfahren gemäß den Ansprüchen 1 und 2, dadurch gekennzeichnet, daß die vernetzungsfähige N-Methylol-Verbindung a2) ein Monomeres mit einer ethylenisch ungesättigten radikalisch polymerisierbaren Gruppe, das ein oder mehrere N-Methylol-funktionelle Gruppen besitzt, ist.

4. Verfahren gemäß den Ansprüchen 1 und 2, dadurch gekennzeichnet, daß die vernetzungsfähige N-Methylol-Verbindung a) eine nicht radikalisch polymerisierbare Verbindung ist, die mindestens 2 kondensationsfähige N-Methylol-Gruppen enthält.

5. Verfahren gemäß Anspruch 3, dadurch gekennzeichnet, daß a2) N-Methylol(meth)acrylamid ist.

6. Verfahren gemäß den Ansprüchen 1 bis 5, dadurch gekennzeichnet, daß das vernetzende Monomere a3) ausgewählt ist aus der Gruppe der Di(meth)acrylverbindungen, der Tri(meth)acrylverbindungen, der Tetra(meth)acrylverbindungen und/oder der (Meth)allyl(meth)acrylverbindungen.

7. Verfahren gemäß den Ansprüchen 1 bis 6, dadurch gekennzeichnet, daß die Monomerkomponente a4) zu 1 bis 25 Gew.-% an der Bildung des Polymerisats A) beteiligt ist.

8. Verfahren gemäß den Ansprüchen 1 bis 7, dadurch gekennzeichnet, daß die Monomerkomponente a5) zu 0,1 bis 15 Gew-% an der Bildung des Polymerisats beteiligt ist.

9. Verfahren gemäß den Ansprüchen 1 bis 8, dadurch gekennzeichnet, daß das hydrophobe Monomere a4) eine Verbindung der Formel I ist: 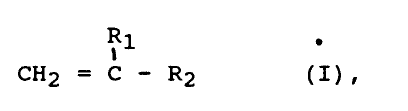 wobei
R₁ für Wasserstoff oder Alkyl mit 1 bis 5 Kohlenstoffatomen, sowie
R₂ für Alkyl, Cycloalkyl, Aryl oder Aralkyl mit 1 bis 20 Kohlenstoffatomen oder für 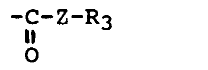 mit R₃ für Alkyl, Cycloalkyl, Aryl oder Aralkyl mit 1 bis 20 Kohlenstoffatomen und Z für O, NH oder NR₃
stehen können.

10. Verfahren gemäß den Ansprüchen 1 bis 9, dadurch gekennzeichnet, daß das amphiphile Monomere a5) eine Verbindung der Formeln II oder IIa ist 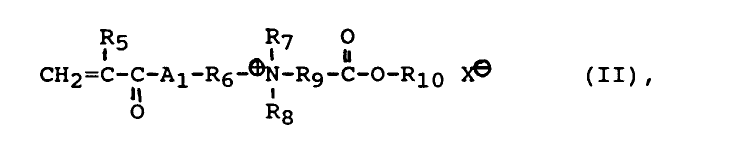 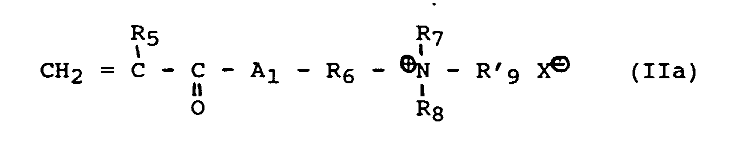 wobei
A₁ für O, NH, NR₄ mit R₄ für Alkyl mit 1 bis 4 Kohlenstoffatomen,
R₅ für Wasserstoff oder Methyl,
R₆ für Alkylen mit 1 bis 18 Kohlenstoffatomen,
R₇ und R₈ unabhängig voneinander für Alkyl mit 1 bis 6 Kohlenstoffatomen
R₉ für Alkylen mit 1 bis 6 Kohlenstoffatomen,
R'₉ für Alkyl mit 1 bis 18 Kohlenstoffatomen,
R₁₀ für Alkyl, Aryl oder Aralkyl mit 8 bis 32 Kohlenstoffatomen, sowie
X für Halogen, OCN, SCN, SO₄CH₃ oder Acetat
stehen können.

11. Verfahren gemäß den Ansprüchen 1 bis 9, dadurch gekennzeichnet, daß das amphiphile Monomere a5) eine Verbindung der Formeln III und IIIa ist. 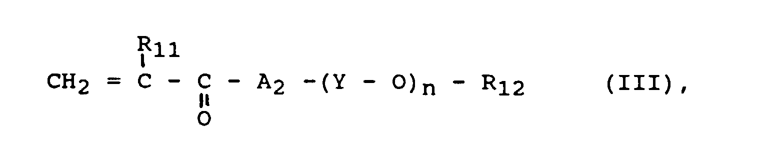 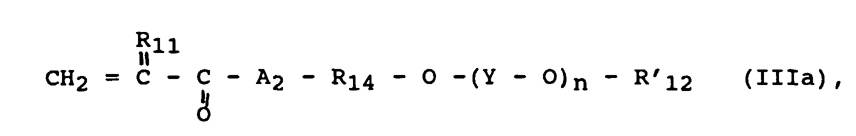 wobei
A₂ für O, NH, NR₁₃ mit R₁₃ für Alkyl mit 1 bis 4 Kohlenstoffatomen,
R₁₁ für Wasserstoff oder Methyl
R₁₂ für Alkyl, Aryl oder Aralkyl mit 8 bis 32 Kohlenstoffatomen,
R'₁₂ für Wasserstoff oder Alkyl mit 1 bis 4 Kohlenstoffatomen,
R₁₄ für Alkylen mit 1 bis 18 Kohlenstoffatomen
Y für Alkylen mit 2 bis 6 Kohlenstoffatomen sowie
n für eine ganze Zahl zwischen 1 und 50
stehen können.

12. Verfahren gemäß den Ansprüchen 1 bis 11, dadurch gekennzeichnet, daß das polymere Dispergiermittel D) ein Polyelektrolyt mit einem mittleren Molekulargewicht M_{w} von weniger als 5 x 10⁵ Dalton ist.

13. Verfahren gemäß den Ansprüchen 1 bis 12, dadurch gekennzeichnet, daß sich an die Herstellung des Polymerisats A) in Gegenwart des polymeren Dispergiermittels D) in der ersten Stufe eine zweite Stufe anschließt, in der der wasserlöslichen Polymerdispersion PD) weiteres polymeres Dispergiermittel D) in wäßriger Lösung hinzugefügt wird.

14. Verfahren gemäß Anspruch 13, dadurch gekennzeichnet, daß während der ersten Stufe der Herstellung des Polymerisats A) in Gegenwart des polymeren Dispergiermittels D) und/oder zwischen der ersten und zweiten Stufe des Verfahren gemäß Anspruch 13 der Wassergehalt der Polymerisation PD) reduziert wird.

15. Verwendung der mittels der Verfahren gemäß den Ansprüchen 1 bis 14 hergestellten Polymerdispersionen als Flockungsmittel für elektrisch geladene Schwebeteilchen, als Retentionsmittel für die Papierherstellung, als Verdickungsmittel, als Bestandteil von Papier- oder Tapetenbeschichtungen, als Entwässerungsmittel und/oder als Bodenverbesserungsmittel.

## Claims

1. Process for preparing low-viscosity, water-soluble, water-based polymer dispersions PD) with high concentrations of active substance, characterised in that the monomer components
a1) 50 to 99.99 % by weight of at least one water-soluble monomer,
a2) 0.01 - 5 % by weight of a crosslinkable N-methylol compound,
a3) 0 to 1% by weight of at least one crosslinking monomer with at least two ethylenically unsaturated, radically polymerisable groups and optionally
a4) 0 to 30 % by weight of at least one hydrophobic monomer and
a5) 0 to 20 % by weight of at least one amphiphilic monomer
are polymerised in aqueous solution in the presence of at least one polymeric dispersant D) to form a polymer A), in that the monomer components a1), a2), a3), a4) and a5) add up to 100 % by weight, in that the resulting polymer A) has an average molecular weight M_{w} of at least 5 x 10⁵ Daltons, and in that the polymer A) is incompatible with the dispersant D).

2. Process according to claim 1, characterised in that at least one of the water-soluble monomers a1) contains an ionic group.

3. Process according to claims 1 and 2, characterised in that the crosslinkable N-methylol compound a2) is a monomer with an ethylenically unsaturated radically polymerisable group which has one or more N-methylol functional groups.

4. Process according to claims 1 and 2, characterised in that the crosslinkable N-methylol compound a) is a compound which is not radically polymerisable and which contains at least 2 N-methylol groups capable of condensation.

5. Process according to claim 3, characterised in that a2) is N-methylol (meth)acrylamide.

6. Process according to claims 1 to 5, characterised in that the crosslinking monomer a3) is selected from the group comprising the di(meth)acrylic compounds, the tri(meth)acrylic compounds, the tetra(meth)acrylic compounds and/or the (meth)allyl(meth)acrylic compounds.

7. Process according to claims 1 to 6, characterised in that the monomer component a4) is included in the formation of the polymer A) in an amount of from 1 to 25% by weight.

8. Process according to claims 1 to 7, characterised in that the monomer component a5) is included in the formation of the polymer in an amount of from 0.1 to 15% by weight.

9. Process according to claims 1 to 8, characterised in that the hydrophobic monomer a4) is a compound of formula I: 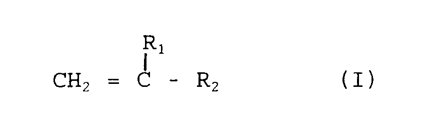 wherein
R₁ may denote hydrogen or alkyl having 1 to 5 carbon atoms, and
R₂ may denote alkyl, cycloalkyl, aryl or aralkyl having 1 to 20 carbon atoms or 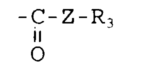 where R₃ may denote alkyl, cycloalkyl, aryl or aralkyl having 1 to 20 carbon atoms and Z may denote O, NH or NR₃.

10. Process according to claims 1 to 9, characterised in that the amphiphilic monomer a5) is a compound of formula II or IIa 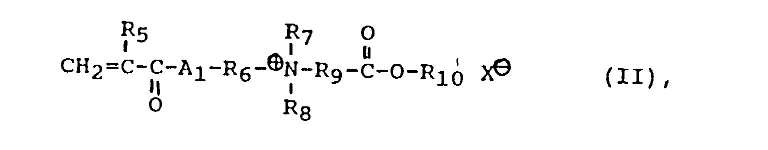 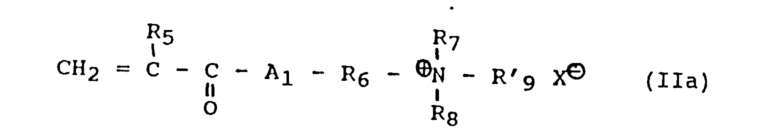 wherein
A₁ may denote O, NH, NR₄ where R₄ denotes C₁₋₄-alkyl,
R₅ may denote hydrogen or methyl,
R₆ may denote C₁₋₁₈-alkylene,
R₇ and R₈ independently of one another may denote C₁₋₆-alkyl,
R₉ may denote C₁₋₆-alkylene,
R'₉ may denote C₁₋₁₈-alkyl,
R₁₀ may denote alkyl, aryl or aralkyl having 8 to 32 carbon atoms, and
X may denote halogen, OCN, SCN, SO₄CH₃ or acetate.

11. Process according to claims 1 to 9, characterised in that the amphiphilic monomer a5) is a compound of formulae III and IIIa, 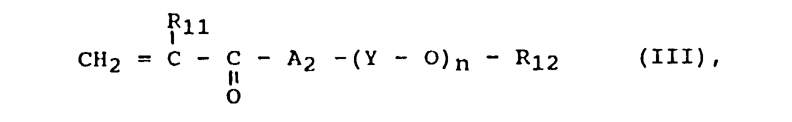 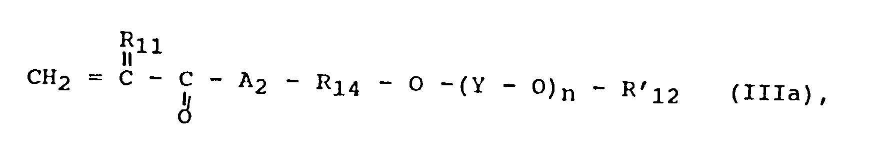 wherein
A₂ may denote O, NH, NR₁₃ where R₁₃ denotes C₁₋₄-alkyl,
R₁₁ may denote hydrogen or methyl,
R₁₂ may denote alkyl, aryl or aralkyl having 8 to 32 carbon atoms,
R'₁₂ may denote hydrogen or C₁₋₄-alkyl,
R₁₄ may denote C₁₋₁₈-alkylene,
Y may denote C₂₋₆-alkylene and
n may denote an integer between 1 and 50.

12. Process according to claims 1 to 11, characterised in that the polymeric dispersant D) is a polyelectrolyte with an average molecular weight M_{w} of less than 5 x 10⁵ Daltons.

13. Process according to claims 1 to 12, characterised in that the preparation of the polymer A) in the presence of the polymeric dispersant D) in the first step is followed by a second step in which additional polymeric dispersant D) in aqueous solution is added to the water-soluble polymer dispersion PD).

14. Process according to claim 13, characterised in that during the first step of producing the polymer A) in the presence of the polymeric dispersant D) and/or between the first and second steps of the process according to claim 13, the water content of the polymerisation PD) is reduced.

15. Use of the polymer dispersions prepared by the processes according to claims 1 to 14 as flocculating agents for electrically charged suspended particles, as retention means for papermaking, as thickeners, as components of paper or wallpaper coverings, as dewatering agents and/or as soil improvers.

## Revendications

1. Procédé de fabrication de dispersions de polymères PD) à basse viscosité solubles dans l'eau à base aqueuse avec une haute concentration de matière active,
caractérisé en ce qu'
on polymérise les composants monomères
a1) de 50 à 99,99 % en poids d'au moins un monomère soluble dans l'eau,
a2) de 0,01-5 % en poids d'un composé de N-méthylol réticulable,
a3) de 0 à 1 % en poids d'au moins un monomère réticulant comportant au moins deux groupes éthyléniquement insaturés, polymérisables par voie radicalaire, et le cas échéant
a4) de 0 à 30 % en poids d'au moins un monomère hydrophobe,
a5) de 0 à 20 % en poids d'au moins un monomère amphiphile, en solution aqueuse en présence d'au moins un agent dispersant polymère D) pour donner un produit de polymérisation A),
• en ce que les composants monomères a1), a2), a3), a4) et a5) se complètent à 100 %,
• en ce que le produit de polymérisation A) résultant présente un poids moléculaire moyen M_{w} d'au moins 5 x 10⁵ daltons, et
• en ce que le polymère A) est incompatible avec l'agent dispersant D).

2. Procédé selon la revendication 1,
caractérisé en ce qu'
au moins l'un des monomères a1) solubles dans l'eau présente un groupe ionique.

3. Procédé selon les revendications 1 et 2,
caractérisé en ce que
le composé de N-méthylol a2) apte à la réticulation est un monomère ayant un groupe éthyléniquement insaturé, polymérisable par voie radicalaire, qui présente un ou plusieurs groupes à fonction N-méthylol.

4. Procédé selon les revendications 1 et 2,
caractérisé en ce que
le composé N-méthylol apte à la réticulation a) est un composé non polymérisable par voie radicalaire qui contient au moins deux groupes N-méthylol aptes à la condensation.

5. Procédé selon la revendication 3,
caractérisé en ce que
a2) est le N-méthylol (méth)acrylamide.

6. Procédé selon les revendications 1 à 5,
caractérisé en ce que
le monomère réticulant a3) est choisi dans le groupe des composés di(méth)acryliques, des composés triméthacryliques, des composés tétra(méth)acryliques et/ou des composés (méth)allyl(méth)acryliques.

7. Procédé selon les revendications 1 à 6,
caractérisé en ce que
le composant monomère a4) participe à raison de 1 à 25 % en poids à la formation du produit de polymérisation A).

8. Procédé selon les revendications 1 à 7,
caractérisé en ce que
le composant monomère a5) participe à raison de 0,1 à 15 % en poids à la formation du produit de polymérisation.

9. Procédé selon les revendications 1 à 8,
caractérisé en ce que
le monomère hydrophobe a4) est un composé de formule I : 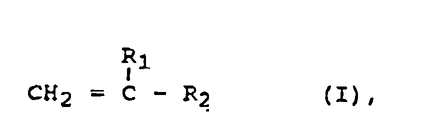 dans laquelle
R₁ représente un hydrogène ou un alkyle ayant de 1 à 5 atomes de carbone et
R₂ est un alkyle, un cycloalkyle, un aryle ou un aralkyle ayant de 1 à 20 atomes de carbone ou 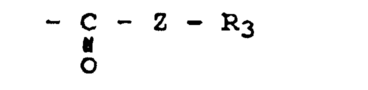
avec R₃ représentant un alkyle, un cycloalkyle, un aryle ou un aralkyle comportant de 1 à 20 atomes de carbone, et Z représente O, NH ou NR₃.

10. Procédé selon les revendications 1 à 9,
caractérisé en ce que
le monomère amphiphile a5) est un composé de formules II ou IIa : 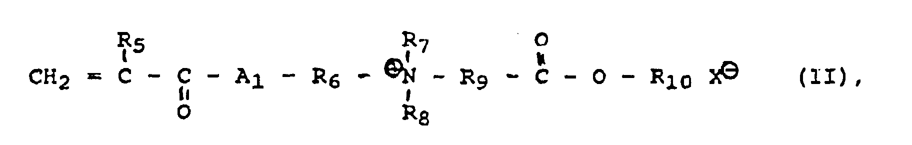 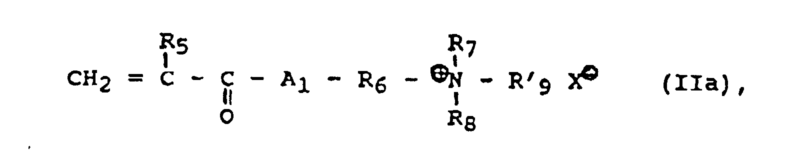 dans laquelle
A₁ représente O, NH, NR₄ avec R₄ représentant un alkyle ayant de 1 à 4 atomes de carbone,
R₅ représente un hydrogène ou un méthyle,
R₆ représente un alkylène ayant de 1 à 18 atomes de carbone,
R₇ et R₈ représentent indépendamment l'un de l'autre un alkyle ayant de 1 à 6 atomes de carbone,
R₉ représente un alkylène ayant de 1 à 6 atomes de carbone,
R'₉ représente un alkyle ayant de 1 à 18 atomes de carbone,
R₁₀ représente un alkyle, un aryle ou un aralkyle ayant de 8 à 32 atomes de carbone, et
X représente un halogène, OCN, SCN, SO₄CH₃, ou un acétate.

11. Procédé selon les revendications 1 à 9,
caractérisé en ce que
le monomère amphiphile a5) est un composé de formules III et IIIa : 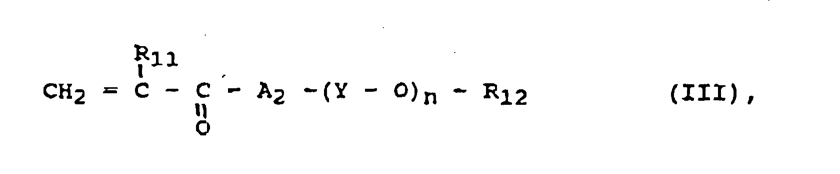 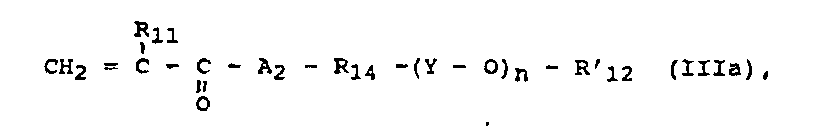 dans laquelle
A₂ représente O, NH ou R₁₃ avec R₁₃ représentant un alkyle ayant de 1 à 4 atomes de carbone,
R₁₁ représente un hydrogène ou un méthyle,
R₁₂ représente un alkyle, un aryle ou un aralkyle ayant de 8 à 32 atomes de carbone,
R'₁₂ représente un hydrogène ou un alkyle ayant de 1 à 4 atomes de carbone,
R₁₄ représente un alkylène ayant de 1 à 18 atomes de carbone,
Y représente un alkylène ayant de 2 à 6 atomes de carbone et,
n représente un nombre entier compris entre 1 et 50.

12. Procédé selon les revendications 1 à 11,
caractérisé en ce que
l'agent dispersant polymère D) est un polyélectrolyte ayant un poids moléculaire moyen M_{w} inférieur à 5 x 10⁵ daltons.

13. Procédé selon les revendications 1 à 12,
caractérisé en ce que
s'adjoint à la production du produit de polymérisation A) en présence de l'agent dispersant polymère D) dans la première étape, une seconde étape dans laquelle on ajoute à la dispersion de polymère soluble dans l'eau PD) une quantité supplémentaire d'agent dispersant polymère D) en solution aqueuse.

14. Procédé selon la revendication 13,
caractérisé en ce qu'
au cours de la première étape de production du produit de polymérisation A) en présence de l'agent dispersant polymère D) et/ou entre la première et la seconde étape du procédé selon la revendication 13, on réduit la teneur en eau de la polymérisation PD).

15. Utilisation des dispersions de polymères produites au moyen du procédé selon les revendications 1 à 14 comme agent de floculation pour des particules en suspension électriquement chargées, comme agent de rétention pour la fabrication du papier, comme épaississant, comme constituant de revêtements de papier ou de tapis, comme agent déshydratant et/ou comme agent d'amélioration du sol.
